Europäisches Patentamt

European Patent Office

Office européen des brevets

(11) Veröffentlichungsnummer: **0 228 423**
**B1**

(12) # EUROPÄISCHE PATENTSCHRIFT

(45) Veröffentlichungstag der Patentschrift:
20.12.89

(21) Anmeldenummer: 86904135.0

(22) Anmeldetag: 24.06.86

(86) Internationale Anmeldenummer:
PCT/EP 86/00365

(87) Internationale Veröffentlichungsnummer:
WO 87/00132 (15.01.87 Gazette 87/1)

(51) Int. Cl.⁴: **B 62 D 53/08**

(54) **HILFSGESTELL FÜR DEN TRANSPORT VON AUTOANHÄNGERN BZW. LASTKRAFTWAGENANHÄNGERN.**

(30) Priorität: 03.07.85 DE 3523716

(43) Veröffentlichungstag der Anmeldung:
15.07.87 Patentblatt 87/29

(45) Bekanntmachung des Hinweises auf die Patenterteilung:
20.12.89 Patentblatt 89/51

(84) Benannte Vertragsstaaten:
AT BE CH DE FR GB IT LI LU NL SE

(56) Entgegenhaltungen:
FR-A- 2 148 747
US-A- 2 622 891
US-A- 3 166 141
US-A- 3 179 196

(73) Patentinhaber: MARKOVIC, Zdravko, Liegnitzer
Strasse 6, D-8058 Erding (DE)

(72) Erfinder: MARKOVIC, Zdravko, Liegnitzer Strasse 6,
D-8058 Erding (DE)

(74) Vertreter: Schönherr, Wolfgang et al, Patentanwälte
Wolfgang Schönherr Dipl.-Ing. Karl-Heinz Serwe
Hawstrasse 28, D-5500 Trier (DE)

ACTORUM AG

## Beschreibung

Die Erfindung betrifft ein von Hand zu bedienendes Hilfsgestell für den Transport von Autoanhängern bzw. Lastkraftwagenanhängern, aus zwei auf einer Achse im Abstand nebeneinander drehbar angeordneten Rädern, einer mit der Achse verbundenen Zugdeichsel und einer auf der Achse angeordneten Stütze, auf der eine Kugel zur Verbindung mit der Kugelpfanne eines Anhängers sitzt.

Aus der FR-A-2 148 747 ist eine Unterstützungsvorrichtung mit zwei im Abstand zueinander auf einer Achse angeordneten Rädern bekannt, die auf der Achse eine Kugel zur Verbindung mit einer Kugelpfanne einer Anhängerdeichsel eines Anhängers trägt. Die Unterstützungsvorrichtung ist außerdem mit der Anhängerkupplung eines Zugfahrzeuges verbindbar.

Nach Abtrennung des Zugfahrzeuges kann in diese Unterstützungsvorrichtung eine Zugdeichsel zum manuellen Transportieren des Anhängers eingesetzt werden. Dazu muß jedoch mit der eingesetzten Zugdeichsel die Unterstützungsvorrichtung stets im Gleichgewicht und genau mit ihrer Kugel in der Kugelpfanne der Anhängerdeichsel des Anhängers gehalten werden, damit Kugelpfanne und Kugel nicht außer Eingriff gelangen.

Dies ist jedoch insbesondere bei unebenem Gelände und auch bei schweren Anhängern nur mit großer Kraft und großer Konzentration möglich.

Die Aufgabe der Erfindung besteht daher darin, ein Hilfsgestell der eingangs genannten Art derart weiterzubilden, daß es einfach in Eingriff mit der Kugelpfanne eines zu transportierenden Anhängers gebracht und der Anhänger von Hand mit Hilfe des Hilfsgestells leicht und sicher transportiert werden kann.

Diese Aufgabe wird dadurch gelöst, daß im Abstand zur Achse ein Hilfsrad verstellbar und festlegbar am Hilfsgestell angeordnet ist, das um eine lotrechte Achse in allen Richtungen schwenkbar ist.

Die Erfindung ist in den Zeichnungen beispielhaft dargestellt. Es zeigen:

Fig. 1 ein Hilfsgestell im Schnitt nach A-A der Fig. 2,

Fig. 2 das Hilfsgestell in Draufsicht,

Fig. 3 das Hilfsgestell in Seitenansicht,

Fig. 4 eine andere Ausführungsform des Hilfsgestells mit einem weiteren Hilfsrad,

Fig. 5 ein Hilfsgestell mit pneumatisch veränderbarer Stütze im Detail und

Fig. 6 ein Hilfsgestell mit mechanisch veränderbarer Stütze im Detail.

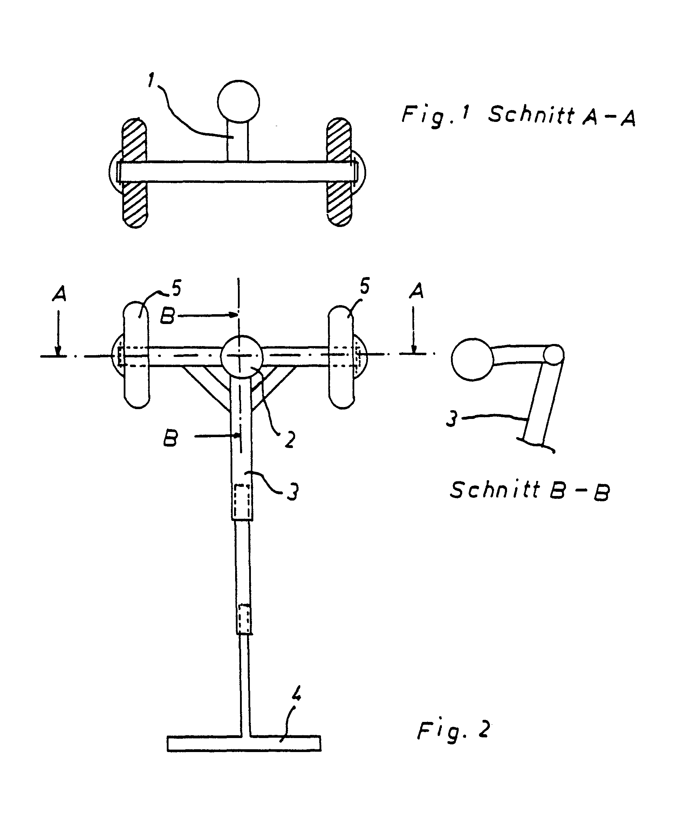

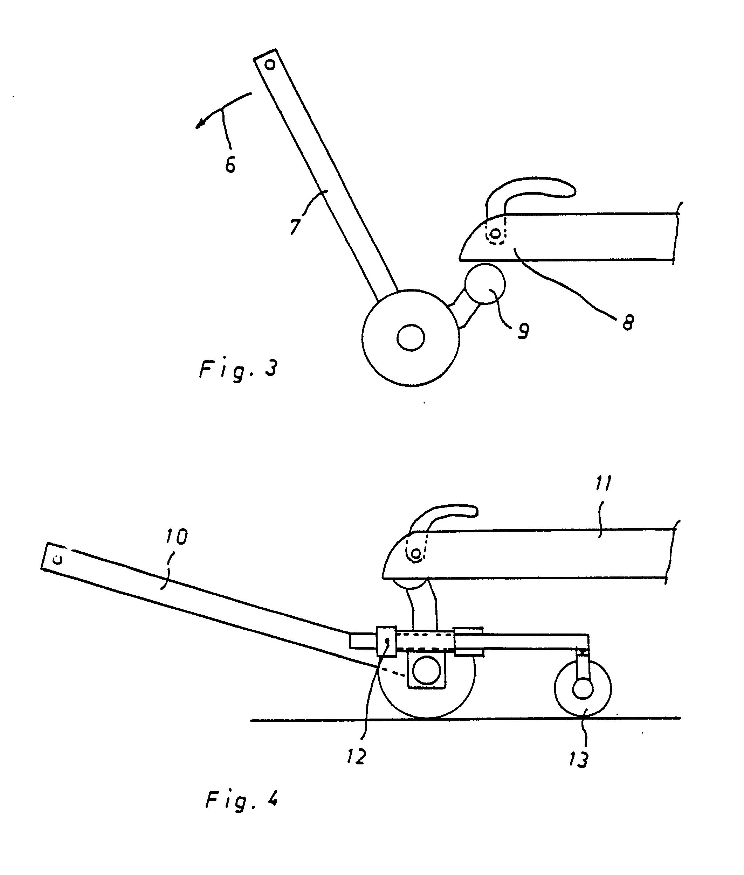

Nach den Fig. 1 bis 3 hat ein Hilfsgestell eine Achse, auf der im Abstand nebeneinander zwei Räder (5) drehbar angeordnet sind. Mit der Achse ist eine Zugdeichsel verbunden. Bei der Ausführungsform nach Fig. 3 ist die Zugdeichsel (7) als feste Deichsel ausgebildet, während nach der Ausführungsform der Fig. 2 die Länge der Zugdeichsel (3) verstellbar ist. Die Zugdeichsel (3) hat an ihrem vorderen Ende einen Handgriff (4) zum Ziehen des Hilfsgestells.

Wie die Fig. 1 bis 3 weiter zeigen, ist mit der Achse eine Stütze (1) verbunden, auf der eine Kugel (9) zur Verbindung mit der Kugelpfanne eines Anhängers (8) angeordnet ist (Fig. 3). In Fig. 2 ist die Kugel, die die gleiche Größe wie bei der Anhängerkupplung oder zur Erleichterung beim Ankoppeln einen etwas kleineren Durchmesser aufweist, mit (2) bezeichnet.

Wie insbesondere die Fig. 3 zeigt, wird zum Ankoppeln des Hilfsgestells die Zugdeichsel entgegen des mit (6) bezeichneten Pfeiles nach oben geschwenkt, so daß die Kugel (9) unter die Kugelpfanne (8) des nicht dargestellten Anhängers geschoben werden kann. Durch Schwenken der Zugdeichsel in Richtung des mit (6) bezeichneten Pfeiles gelangt die Kugel (9) in Eingriff mit der Kugelpfanne (8), so daß nunmehr der Anhänger durch Ziehen und Schieben an der Zugdeichsel (7) bewegt werden kann.

Bei der Ausführungsform eines Hilfsgestells nach Fig. 4 ist mit dem Hilfsgestell ein weiteres Hilfsrad (13) verstellbar und mit Hilfe einer Schraube (12) festlegbar verbunden. Dieses Hilfsrad (13) ist durch Lösen der Befestigungsschraube (12) vom Hilfsgestell abnehmbar. Weiterhin ist das Hilfsrad (13) um eine lotrechte Achse in allen Richtungen schwenkbar am Hilfsgestell angeordnet. Bei Verwendung des Hilfsgestells wird bei gelöster Schraube (12) das Hilfsgestell unter eine Anhängerdeichsel (11) geschoben und nach Befestigen der Schraube (12) kann durch Ziehen und Drücken an der Zugdeichsel (10) der nicht dargestellte Anhänger bewegt werden.

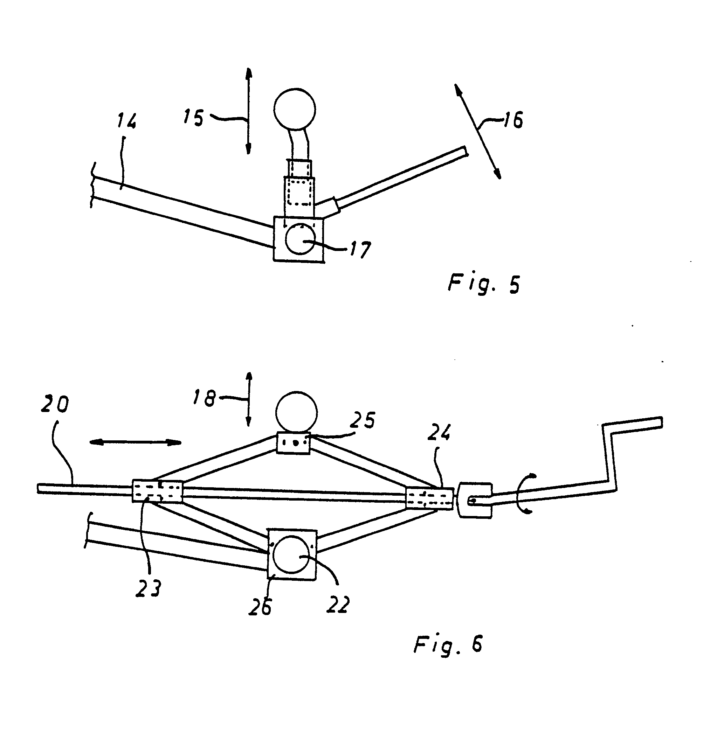

Bei der Ausführungsform des Hilfsgestells nach Fig. 5 ist die Stütze in Richtung der mit (15) bezeichneten Doppelpfeile in bezug zur Achse (17) hydraulisch verstellbar. Bei der Ausführungsform des Hilfsgestells nach Fig. 6 ist die Stütze in Richtung der mit (18) bezeichneten Doppelpfeile in bezug zur Achse (22) über ein Zahnstangengetriebe (23, 24, 25 und 26) mechanisch verstellbar. Auf diese Weise kann die Länge der Stütze jeweils an den zu bewegenden Anhänger angepaßt werden.

Auf dem Hilfsgestell kann auch ein kleiner Antriebsmotor (Otto-, Diesel- oder Elektromotor) angebracht werden. Das Hilfsgestell kann überall dort eingesetzt werden, wo übliche Zugfahrzeuge wegen ihrer Größe oder aus anderen Gründen nicht eingesetzt werden können und die Anhänger zum Beladen bzw. Entladen oder aus anderen Gründen bewegt werden müssen. Die Hilfsgestelle können in verschiedenen Größen und Ausführungsformen hergestellt werden, so daß sie jeweils an die zu bewegenden Anhänger angepaßt sind.

## Patentanspruch

Von Hand zu bedienendes Hilfsgestell für den Transport von Autoanhängern bzw. Lastkraftwagenanhängern, aus zwei auf einer Achse im Abstand nebeneinander drehbar angeordneten Rädern (5), einer mit der Achse verbundenen Zugdeichsel (7; 3, 4; 10) und einer auf der Achse angeordneten Stütze (1), auf der eine Kugel (9) zur Verbindung mit der Kugelpfanne eines Anhängers (8) sitzt, dadurch gekennzeichnet, daß im Abstand zur Achse ein Hilfsrad (13) verstellbar und festlegbar am Hilfsgestell angeordnet ist, das um eine lotrechte Achse in allen Richtungen schwenkbar ist.

## Claim

A manually operated hooking support for the transport of car trailers or truck trailers, consisting of two wheels (5) rotatably mounted on an axle in spaced parallel arrangement, a towbar (7; 3, 4; 10) connected with said axle and a support (1) arranged on said axle on which is seated a ball (9) for connection with the ball socket of a trailer (8), characterised in that at a distance relative to the axis an auxiliary wheel (13) is arranged which can be adjusted and locked into position on the hooking support, which auxiliary wheel can be pivoted in all directions about a vertical axis.

## Revendication

Chariot accessoire utilisable manuellement pour le transport d'une caravane, ou d'une remorque d'automobile ou de camion, comprenant deux roues (5) convenablement écartées l'une de l'autre sur un même essieu où elles tournent, tandis qu'un timon de traction (7; 3, 4; 10), est relié à cet essieu, alors qu'un support (1) prévu sur l'axe est surmonté par une boule (9) pour l'accouplement avec la coupelle d'attelage d'une remorque (8) caractérisé en ce que, à distance de l'essieu, le chariot accessoire comporte une roue auxiliaire (13) réglable et immobilisable, tandis que, par ailleurs, elle peut osciller dans toutes les directions autour d'un axe vertical.

Fig. 1 Schnitt A-A

Schnitt B-B

Fig. 2

Fig. 3

Fig. 4

Fig. 5

Fig. 6